# EUROPEAN PATENT APPLICATION

(11) **EP 4 356 784 A1**
(43) Date of publication of application: **24.04.2024**
(21) Application number: 22202141.2
(22) Date of filing: 18.10.2022
(51) Int. Cl.: A45D 44/02, A45D 44/04, A47B 79/00, B01D 53/00, F24F 8/00

(54) **SALON TROLLEY FOR A HAIR SALON**

(71) Applicant: Kao Germany GmbH, 64297 Darmstadt (DE)
(72) Inventor: Kraus, Sebastian, 64297 Darmstadt (DE); Zeiter, Frank, 64297 Darmstadt (DE)
(74) Representative: Michalski Hüttermann & Partner Patentanwälte mbB

(57) **Abstract**

It is provided a salon trolley (10) for storing and moving of hairdresser tools in a hair salon, comprising a moveable corpus (12) for providing shelves and/or receiving drawers (14) and an air purifier (28) for cleaning ambient air, wherein the air purifier (28) comprises an air duct (35), wherein an intake opening (36) of the air duct (35) is located above the corpus (12). Due to the moveable air purifier (28) and its intake opening (36) located close to the hairdresser and his client, an increased health safety is provided.

## Description

The invention relates to a salon trolley, which can be used by a hairdresser for providing hairdresser tools close to his working space within a hair salon.

When the hairdresser cuts the hair of a client, it is necessary that the hairdresser works very close to his client. Due to this close contact, the hairdresser and the client are exposed to the risk of infecting each other with possible viruses or bacteria, such as the Corona virus. It is known providing a static air purifying system into the hair salon, which is dimensioned cleaning the entire air volume of the corresponding room of the hair salon. However, the static air purifying system is expensive and provides only a small increase in health safety for the hairdresser and the client.

From EP 4 035 696 A1 a static air purifying system for purifying a room is known.

From EP 1 655 196 A2 a salon trolley for hair salon is known comprising a movable rectangular corpus for receiving drawers, wherein a top side of the corpus is formed as a bowl for receiving hairdresser tools.

It is the object of the invention providing measurements for providing a high health safety for a hairdresser and his client.

The solution of this object is provided according to the invention by salon trolley according to the features of claim 1. Preferred embodiments of the invention are given by the dependent claims, which can constitute each solely or in combination an aspect of the invention. If a feature is shown in combination with another feature, this serves only to simplify the presentation of the invention and is in no way intended to imply that this feature cannot also be a further development of the invention without the other feature.

An aspect of the invention is directed to a salon trolley for storing and moving of hairdresser tools in a hair salon, comprising a moveable corpus for providing shelves and/or receiving drawers and an air purifier for cleaning ambient air, wherein the air purifier comprises an air duct, wherein an intake opening of the air duct is located above the corpus.

Usually, a hairdresser moves his hairdresser tools from one client to the next client by means of a salon trolley. It was observed, that the salon trolley is positioned usually very close to the hairdresser and his client at the working space of the hairdresser. Further it was recognized, that the salon trolley is positioned at a place, which would be nearly optimal for a static air purifying system, wherein it would not be possible or would be at least very cumbersome to position the static air purifying system at a place reserved for the salon trolley. However, it is used the insight, that an air purifier, which is much smaller than a common static air purifying system, would be sufficient for cleaning the air at the working space of the hairdresser in a sufficient manner, when the possibly contaminated ambient air is sucked in very close to the hairdresser and the client, which would be the case, when the air purifier would be located at the place of the salon trolley.

Since the air purifier is a part of the salon trolley according to the invention, the air purifier is always located where also the salon trolley is positioned. Preferably, the air purifier is placed as an ad-on-module onto the top side of the corpus, particularly partially inside a bowl formed by the top side of the corpus. The air purifier can be fully integrated into the corpus of the salon trolley. Since the intake opening of the air duct of the air purifier is located elevated with respect to the top side of the corpus, the intake opening is located not only very close to the hairdresser and the client within a horizontal plane but also very close to the heads of the hairdresser and his client in a vertical direction. The intake opening of the air purifier can be located at a point within a three-dimensional space, where predominantly breathing air of the hairdresser and the client can be sucked in. Particularly a surface normal of a flow cross section of the intake opening may point to a space between the heads of the standing hairdresser and his sitting client. Since it is particularly breathing air, which may be contaminated by germs, viruses and/or bacteria, the health safety may be significantly increased. It is sufficient to clean only the small area between the hairdresser and his client. Since the air purifier can be dimensioned quite small and light weight, it is no problem to move the air purifier together with the salon trolley. The power consumption and the noise pollution of the air purifier can be significantly reduced compared to a common static air purifying system. The air purifier is moveable by means of the moveable corpus of the salon trolley, so that a purification can be provided at any place where the salon trolley is placed. Particularly a purification of air at a suitable place can be provided even when the salon trolley is not used by the hairdresser. Due to the moveable air purifier and its intake opening located close to the hairdresser and his client, an increased health safety is provided.

The corpus of the salon trolley may be mainly rectangular comprising a back wall, two side walls, a top wall providing the top side and a bottom wall. Rollers may be connected to the bottom wall so that the corpus is moveable over a ground. The walls of the corpus may limit a front opening, wherein the front opening of the corpus define a front side of the corpus. The corpus may comprise shelves and/or drawers. The front faces of the drawers may be located inside the plane of the front side of the corpus. The shelves and/or the drawers may stiffen the corpus and may increase the stability of the corpus. Hairdresser tools and other things may be deposited onto the shelves and/or into the drawers. A space above a shelve or occupied by a drawer may be replaced by the air purifier, so that no significant amendments are necessary for providing the corpus of the salon trolley with the air purifier. Particularly the top side of the corpus may be designed for placing hairdresser tool onto the top side. Preferably, an additional tray may be connected to the corpus, for instance by inserting lugs and/or hooks into a corresponding opening so that the additional tray may be releasably connected to the corpus, particularly at the top side of the corpus.

The intake opening may comprise a larger cross section than an extension along a surface normal. The air flow into the intake opening may be aligned mainly in horizontal direction but redirected downwards in a mainly vertical direction where at least one air treatment device for purifying the sucked in ambient air is located, for instance a filter tissue or the like. The ambient air may be sucked in by means of a fan located in the flow path of the sucked in ambient air inside the air duct. The air duct may be composed of at least one rigid pipe and/or at least one flexible hose.

Particularly the air purifier is releasably connected to a top side of the corpus. The air purifier may be fastened to the corpus by means of screws and/or clip connectors. Particularly when the top side of the corpus is not designed as flat plate but as a three-dimensional bowl or the like, the bottom part of the air purifier may be formed correspondingly to the forming of the top side of the corpus providing a positive fit, when the air purifier is inserted into the three-dimensional forming of the top side of the corpus. Since the air purifier is located at least partially above the top side of the corpus, the air purifier, particularly the intake opening of the air purifier, can be located quite high. The intake opening of the air purifier can be easily located at a place, where breathing air of the hairdresser and/or of his client can be sucked in predominantly.

Preferably, the air purifier comprises a bowl for receiving hairdresser tools and/or the top side of the corpus forms a bowl for receiving hairdresser tools. The air purifier may comprise a housing which is designed for providing the bowl. The air purifier may be placed onto the top side of the corpus, but is designed such that hairdresser tools can be placed onto the housing instead onto the top side of the corpus. Particularly the bowl of the air purifier can be inserted into another bowl formed by the top side of the corpus, which would be not or at least only partially accessible, when the air purifier is placed onto the corpus. The air purifier may provide in addition the function of accommodating hairdresser tools. For example, the housing of the air purifier may comprise a round deepening for receiving an aerosol can and/or a hair dryer.

Particularly preferred the air duct comprises a plate-like intake duct forming the intake opening, wherein the intake duct is moveable between a mainly vertical use position and a mainly horizontal rest position. Preferably the plate-like intake duct is pivotable connected. If so, the air duct is disconnected in the rest position, wherein a connection with the other part of the air duct is provided, when the intake duct is moved into the use position. Preferably the intake duct can be positioned at an angle between the rest position and the use position, so that the alignment of the sucked in ambient air stream can be adjusted.

Particularly the intake duct closes at least partially, particularly mainly completely, the bowl in the rest position. The intake duct can provide the further function of opening and closing the bowl, provided by a housing of the air purifier or provided by the top side of the corpus. Hairdresser tool may be accommodated inside the tool and secured by the material of the intake duct in the rest position. When the hairdresser wants access to the hairdresser tools inside the bowl, he will open the bowl by moving the intake duct from the rest position into the use position. Particularly the air purifier is started automatically, when the intake duct leaves its rest position and/or reaches its use position. The air purifier may be automatically switched on, when the hairdresser comes in close contact with a client, and/or may be switched off automatically, when the hairdresser cleared away his tools into the bowl.

Preferably the intake duct is aligned mainly flush with a front side of the corpus in the use position. The intake duct may protrude upwards but not sidewards with respect to the corpus in the use position, so that the working space of the hairdresser is not affected by the intake duct. In addition, the intake duct may be positioned as close as possible to the hairdresser and his client without leaving the area occupied by the corpus. An efficient purifying of the ambient air at small building space is possible.

Particularly preferred the air purifier comprises and/or the top side of the corpus provides a storage area, particularly a bottom of the/a bowl, for placing hairdresser tools, wherein the air purifier comprises at least one air treatment device located below the storage area. Storage space for accommodating hairdresser tools and similar things is not reduced by integrating the air purifier into the salon trolley. When the top side of the corpus would not be accessible for the hairdresser for clearing his tools away, the corresponding storage are may be provided by the air purifier itself, particularly by means of a suitable three-dimensional forming of a housing of the air purifier. If so, the storage area and/or a bowl providing the storage area may be bordered by the air purifier and the top side of the corpus together. Since the at least one air treatment device may be fed with the ambient air to be purified via a quite small air duct, it is possible to locate the air treatment device(s) below a three-dimensional formed storage area and/or a bowl. When the air duct should not be provided outside the area occupied by the corpus, only a small area is required for connecting the intake opening of the air duct with the air treatment device(s) via a sufficient flow cross section.

Particularly the at least one air treatment device is a cyclone, an ultraviolet lamp, an electro sterilizer and/or a filter pad. The air treatment device may be a separating device using the different weight and/or different density of air and the substances to be separated, particularly germs. The air treatment device may be a sterilizer using high frequent waves, like ultraviolet light, microwaves, x-ray waves, and/or ionic or oxidating substances like ozone, electric discharges. Particularly when a sterilizer is used as an air treatment device, an air purifying is provided with low maintenance, no replacement of consumable parts and/or a self-cleaning function so that stable working parameters and a constant air purifying effect over time can be provided. If so, at least one air treatment device can be a replaceable filter pad, particularly according to the FFP2 standard of EN 149.

Preferably the storage area comprises a passage opening for feeding ambient air from the intake opening towards the at least one air treatment device. The air duct of the gas purifier may be led through the storage area via the passage opening. The passage opening may correspond to flow cross section of the sucked in ambient air. The sucked in ambient air may flow from the intake opening in vertical direction through the storage area to the air treatment device(s). The storage area may be designed quite large, wherein only a small area is used for the passage opening connection the intake opening of the airduct with the air treatment device(s).

Particularly preferred the air purifier comprises a fan for sucking in ambient air into the air duct, wherein the fan is located below the storage area. The fan can be located at a space, where no space for accommodating hairdresser tools onto the top side of the corpus and/or onto the storage area is lost. Further the operation sound of the fan is blocked by walls of the corpus and/or the storage area so that noise pollution is reduced.

Particularly the air purifier comprises a rechargeable battery for energizing the air purifier, wherein the rechargeable battery is located below the storage area. The battery can be located at a space, where no space for accommodating hairdresser tools onto the top side of the corpus and/or onto the storage area is lost. The, particularly replaceable, battery may energize a fan and/or the air treatment device(s) of the air purifier. Due to the battery, it is not necessary connecting the air purifier to an electric grid. When in operation, the movability of the salon trolley is not affected by electric cables or the like.

Preferably the at least one air treatment device and/or the fan and/or the rechargeable battery is/are located inside a drawer. One of the drawers inserted in the corpus may be replaced by a different drawer, where a main part of the air purifier is provided. The design of the corpus may not be changed for integrating the air purifier. Hence a solon trolley without air purifier can be easily and cost efficient retrofit by the air purifier.

Particularly preferred the air duct comprises an outlet opening for discharging purified air at a rear side of the corpus, wherein particularly the outlet opening is aligned mainly flush with the rear side of the corpus. The outlet opening of the air duct of the air purifier may not protrude from the corpus. The ambient air may be sucked in from the front side of the corpus and emitted at the rear side of the corpus away from the hairdresser and his client. This leads to an enhanced air conditioning at the working space of the hairdresser. Used air is delivered away from the working space so that fresh air may replace the used air easily.

Particularly the air purifier comprises at least one operating element for operating the air purifier and/or a display for providing information about the operating conditions of the air purifier, wherein the at least one operating element and/or the display is/are located at a front side and/or side face of the corpus. The air purifier may be controlled and/or switch on and off by means of the operating element(s). For instance, the air flow of the sucked in ambient air may be controlled by means of a rotary control. The display may provide information, whether the air purifier is switched on or off and/or the power of the fan and/or status information about the air purifier. Since the operating element and/or the display are not positioned at a top face of the salon trolley but pointing in a horizontal direction an storage area at the top of salon trolley is not impaired by the providing of the operating element and/or the display.

Preferably the corpus comprises rollers for moving the corpus over a ground. Particularly three or four rollers are provided under a bottom wall of the corpus. The hairdresser tools accommodated in the corpus as well as the air purifier may be positioned easily at a place close to the working space of the hairdresser in proximity to the hairdresser and his client and particularly close to the breathing air of the hairdresser and his client.

These and other aspects of the invention will be apparent from and elucidated with reference to the embodiments described hereinafter, wherein the described features can constitute each solely or in combination an independent aspect of the invention. In the drawings:
Fig. 1: is a schematic exploded view of a salon trolley in a used position,
Fig. 2: is a schematic cross-sectional view of an air purifier of the salon trolley of Fig. 1,
Fig. 3: is a schematic view of a salon trolley of Fig. 1 in a rest position and
Fig. 4 is a schematic perspective view onto a part of the air purifier of Fig. 2.

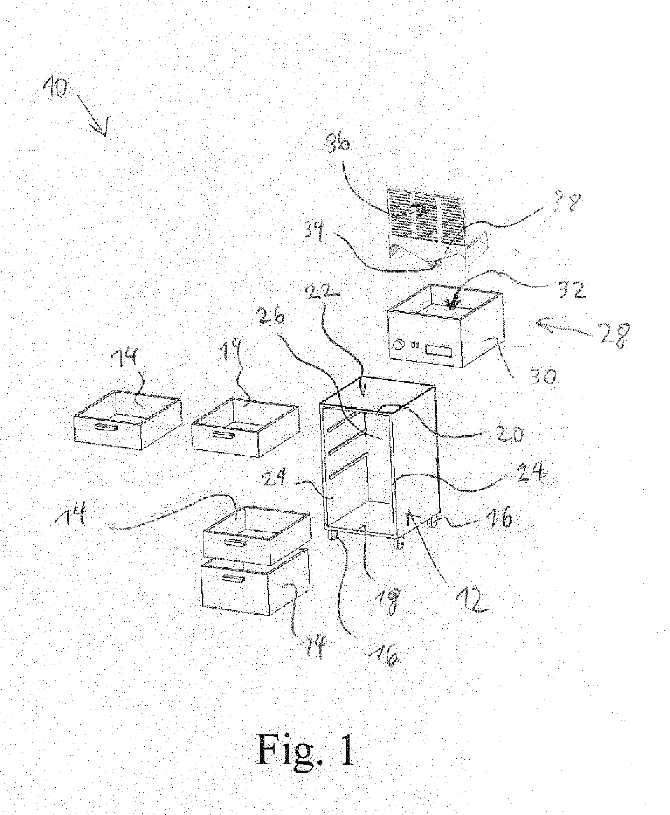

The salon trolley 10 as illustrated in Fig. 1 comprises a mainly rectangular corpus 12, which is adapted to hold drawers 14 of different size. Hairdresser tools and other things may be stored in the drawers 14. Rollers 16 are connected to a bottom wall 18 of the corpus so that the salon trolley 10 may de rolled over a ground. The corpus 12 comprises a top wall 20 providing a top side 22 of the corpus. The top wall 20 and the bottom wall 18 are connected via two side walls 24 and a rear wall 26. The top wall 20 is designed as flat plate in the illustrated embodiment but may be designed as bowl and/or provided with at least one deepening for accommodating hairdresser tools.

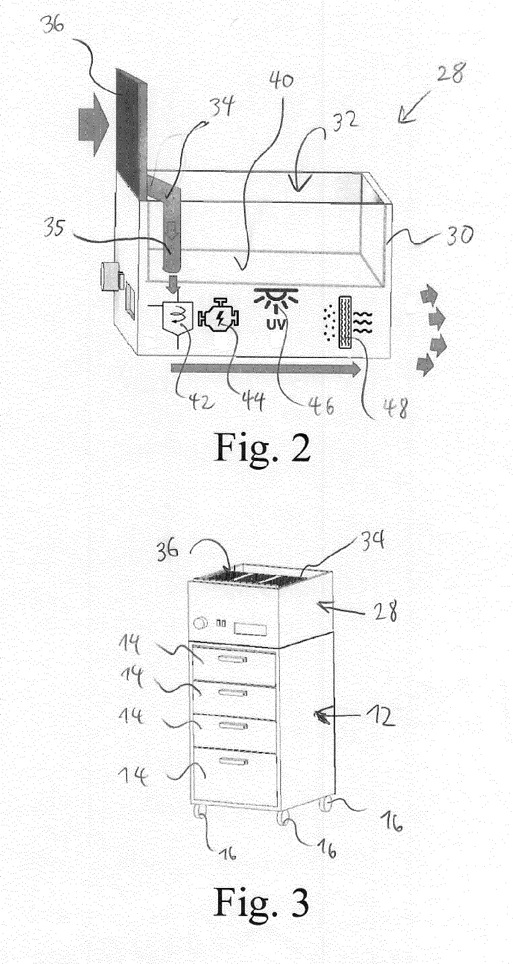

An air purifier 28 is fastened on the top of the corpus 12. The air purifier 28, which is illustrated in Fig. 2 in further detail, comprises a housing 30 formed as a bowl 32 for receiving hairdresser tool and other things. The air purifier 28 further comprises an intake duct 34 of an air duct 35 led through the hosing 30. The air duct 35 comprises a quite large and particularly rectangular intake opening 36 pointing in a horizontal direction. In the illustrated embodiment the air duct 35 comprises a mainly funnel shaped casing 38, by which the ambient air sucked into the intake opening 36 of the intake duct 34 and passing a lamellae grill is led downwards along a mainly vertical direction through the housing 30. The bowl 32 provided by the housing 30 of the air purifier 28 comprises a storage area 40 which is mainly provided by the bottom of the bowl 32. A not illustrated fan and several air treatment devices are provided in the part of the air duct 35 located below the storage area 40. The plurality of air treatment devices may be a cyclone 42, an electro sterilizer 44, an ultraviolet lamp 46, and a filter pad 48. The purified air may be emitted at the rear side of the corpus 12.

The intake duct 34 may be swiveled between an upright use position as illustrated in Fig. 1 and Fig. 2 and a mainly horizontal rest position as illustrated in Fig. 3. The bowl 32 may be at least partially or even completely closed by the material of the intake duct 34 in the rest position so that hairdresser tools are securely stored in the bowl 32 of the air purifier. The dimensions of the air purifier 28 are adapted to the dimensions of the corpus 12 so that all side faces one above the other are mainly flush with each other and arranged in a common plane.

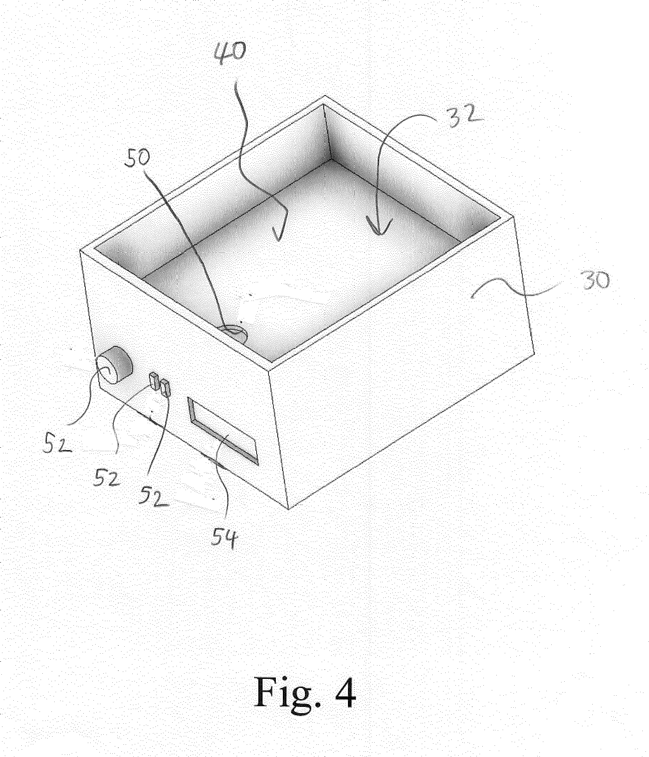

As illustrated in Fig. 4 the housing 30 of the air purifier 28 may comprise a passage opening 50 at the bottom of the bowl 32 through which the air duct 35 can be fed. The intake duct 34 may be inserted into the bowl 32 of the housing 30 such, that the air duct 35 is inserted into the passage opening 50. The inserted air duct 35 as well as the parts of the intake duct 34 clamped into the bowl 32 provide a sufficient stability that the part of the intake duct 34 providing the intake opening 36 can be pivoted between the use position and the use position. Further the air purifier 28 may comprise operating elements 52 and a display 54 for operating the air purifier 28. The operating elements 52 and the display 54 may be provided at a front face and/ort a side face of the housing 30 of the air purifier 28 so that the receiving space of the bowl is not impaired.

## Claims

1. Salon trolley (10) for storing and moving of hairdresser tools in a hair salon, comprising
a moveable corpus (12) for providing shelves and/or receiving drawers (14) and
an air purifier (28) for cleaning ambient air, wherein the air purifier (28) comprises an air duct (35), wherein an intake opening (36) of the air duct (35) is located above the corpus (12).

2. Salon trolley (10) according to claim 1, wherein the air purifier (28) is releasably connected to a top side (22) of the corpus (12).

3. Salon trolley (10) according to claim 1 or 2, wherein the air purifier (28) comprises a bowl (32) for receiving hairdresser tools and/or the top side (22) of the corpus (12) forms a bowl for receiving hairdresser tools.

4. Salon trolley (10) according to anyone of claims 1 to 3, wherein the air duct (35) comprises a plate-like intake duct (34) forming the intake opening (36), wherein the intake duct (34) is moveable between a mainly vertical use position and a mainly horizontal rest position.

5. Salon trolley (10) according to the combination of claims 3 and 4, wherein the intake duct (34) closes at least partially, particularly mainly completely, the bowl (32) in the rest position.

6. Salon trolley (10) according to claim 4 or 5, wherein the intake duct (34) is aligned mainly flush with a front side of the corpus (12) in the use position.

7. Salon trolley (10) according to anyone of claims 1 to 6, wherein the air purifier (28) comprises and/or the top side (22) of the corpus (12) provides a storage area (40), particularly a bottom of the/a bowl (32), for placing hairdresser tools, wherein the air purifier (28) comprises at least one air treatment device (42, 44, 46, 48) located below the storage area.

8. Salon trolley (10) according to claim 7, wherein the at least one air treatment device (42, 44, 46, 48) is a cyclone (42), an ultraviolet lamp (46), an electro sterilizer (44) and/or a filter pad (48).

9. Salon trolley (10) according to claim 7 or 8, wherein the storage area (40) comprises a passage opening (50) for feeding ambient air from the intake opening (36) towards the at least one air treatment device (42, 44, 46, 48).

10. Salon trolley (10) according to anyone of claims 7 to 9, wherein the air purifier (28) comprises a fan for sucking in ambient air into the air duct (35), wherein the fan is located below the storage area (50).

11. Salon trolley (10) according to anyone of claims 7 to 10, wherein the air purifier (28) comprises a rechargeable battery for energizing the air purifier (28), wherein the rechargeable battery is located below the storage area (40).

12. Salon trolley (10) according to anyone of claims 6 to 11, wherein the at least one air treatment device (42, 44, 46, 48) and/or the fan and/or the rechargeable battery is/are located inside a drawer (14).

13. Salon trolley (10) according to anyone of claims 1 to 12, wherein the air duct (35) comprises an outlet opening for discharging purified air at a rear side of the corpus (12), wherein particularly the outlet opening is aligned mainly flush with the rear side of the corpus (12).

14. Salon trolley (10) according to anyone of claims 1 to 13, wherein the air purifier (28) comprises at least one operating element (52) for operating the air purifier (28) and/or a display (54) for providing information about the operating conditions of the air purifier (28), wherein the at least one operating element (52) and/or the display (54) is/are located at a front side and/or side face of the corpus (12).

15. Salon trolley (12) according to anyone of claims 1 to 14, wherein the corpus (12) comprises rollers (16) for moving the corpus (12) over a ground.
